# EUROPEAN PATENT APPLICATION

(11) **EP 1 830 567 A1**
(43) Date of publication of application: **05.09.2007**
(21) Application number: 04802502.7
(22) Date of filing: 21.12.2004
(51) Int. Cl.: H04N 7/15

(54) **A METHOD FOR UPGRADING SOFTWARE IN THE TELECONFERENCE VIDEO TERMINAL**

(71) Applicant: ZTE Corporation, 518057 Shenzhen City, Guandong Province (CN)
(72) Inventor: ZHU, Xiaobin, ZTE Plaza, Keji Road South, Shenzhen, Guangdong 518057 (CN); LI, Hui, ZTE Plaza, Keji Road South, Shenzhen, Guangdong 518057 (CN); TIAN, Zhiping, ZTE Plaza, Keji Road South, Shenzhen, Guang dong 518057 (CN)
(74) Representative: Becker Kurig Straus
(86) International application number: PCT/CN2004/001489
(87) International publication number: WO 2006/066451

(57) **Abstract**

The present invention discloses a method for upgrading software in the teleconference video terminal. It includes the steps of sending the upgrading startup information to the long-range video terminal which needed software upgrading from the local video terminal which had the upgrading software for the sake of starting the upgrading process, and vice versa; building upgrading data channel between the local terminal and the long-range terminal; communicating with the long-range terminal through said data channel from the local terminal for the sake of transmitting the upgrading software code to said long-range terminal. This invention makes use of the existing teleconference video lines of the video conference system, so it is convenience to realize long-range upgrading and reduces the maintenance cost of the terminal devices

## Description

### Technical Field

The present invention relates to digital multimedia communication field, and particularly to a method for upgrading software in a remote video conference terminal through video conference links.

### Background of the Invention

With development of information technology, it is more and more popular for embedded software to run in various electronic apparatuses. In view of repairing faults or extension functions, it is usually necessary to upgrade the embedded software. The original fussy method of replacing or reprogramming ROM chip by detaching apparatuses has been few in commercialized products, and almost all the products recently produced have the function of on-system upgrading. The function decreases maintenance costs of the products while increases benefits of the apparatus manufacturer.

Chinese patent No. 02136574.1, entitled "A Method for Automatically Upgrading and Updating Software on the basis of Client/Server Structure", discloses a method of software auto-upgrade. This method compares the version number currently used with the latest version number of the software without manual intervention of users during the upgrading process, and downloads the software of the latest version automatically if necessary, thereby accomplishing automatically upgrading and updating of the software. In this patent, the upgraded terminal can download the software of the latest version only by connecting to a FTP server through an IP network, and the upgradecan not be implemented in an environment without the IP network.

China patent No. 02125694.2, entitled "Method for Upgrading Firmware in use of the Wireless Communication Module", discloses a method for upgrading the firmware in use, wherein comprising following steps: 1) setting a firmware upgrading control program in a control module of a communication apparatus where the wireless Communication module locates, and installing a software upgrading tool and an upgrading program of the wireless Communication module in a computer; 2) the computer activating the wireless Communication module which is in a power failure state by running application program and by using the control module; 3) the computer entering the wireless Communication module of the communication apparatus into a firmware upgrading state by continually running the application program and by using the control module; 4) the application program of the computer sending a new firmware to the wireless Communication module by using the software upgrading tool and the upgrading program of the wireless Communication module to complete the upgrade. It is necessary for the method of present invention to use a computer equipped with the dedicated software, and connect the computer with the upgraded device through a IP network or a computer interface, and the remote upgrade can not be realized when there is no IP network in the site of the upgraded device.

U.S. patent No. US6535924, entitled "Method and apparatus for performing a software upgrade of a router while the router is online", discloses a method and an apparatus for online upgrading the software of a router. Here, the key software assembly of the router is backed up when upgrading, thereby capable of online upgrading the router. The invention needs building an IP network connection between the router and a source node, and this can not be implemented in an environment without IP network.

U.S. patent No. US6124938, entitled "Submitting software upgrades to a digital printer through a standard port", discloses a method for upgrading software of the digital printer through a print port. Therein, a computer and the digital printer use a set of defined mechanisms therebetween, and communicate with each other through the print port, thereby realizing software upgrade of the digital printer. It is necessary for the invention to use an upgraded terminal through a dedicated interface to connect the terminal which needs to be upgraded, and incapable to realize the remote upgrade.

In general, in the current techniques for upgrading the software in use, there are two methods for connecting the upgraded apparatus: one method is to use an interface such as print port which is self-provided with a computer to connect, this upgrading manner requires the distance between the server which provides a upgrading software and the upgraded apparatus should not exceed the maximum transmission distance of the interface used in the computer, so it is difficult to realize remote upgrade; another method is to use a computer network interface to connect, wherein it is the most popular to use the IP network interface, this method can be applied to the remote upgrade, but requires that there is a valid computer network link between the server which provides the upgrading software and the upgraded apparatus, and in the case of applying the video conference terminal, it is always difficult to satisfy such a requirement.

### Summary of the Invention

The present invention aims to provide a method for upgrading software in a remote video conference terminal by using video conference links to overcome the limited defect in the prior art that it is necessary to use a computer network interface when upgrading software in the video conference terminal remotely.

In order to realize the above objects, the technical solution adopted in the present invention is as follows:
A method for upgrading software in a remote video conference terminal, this method utilizes a local video conference terminal equipped with the required upgrading software through video conference links to upgrade the software in the remote video conference terminal of which the software needs to be upgraded.

Preferably, the method comprises the steps of: the local video conference terminal equipped with the required upgrading software sending a startup information about upgrading to the remote video conference terminal of which the software needs to be upgraded to start a software upgrading process, or vice versa; building an upgrading data channel between the local video conference terminal and the remote video conference terminal; and the local video conference terminal 1 communicating with the remote video conference terminal through the upgrading data channel to transmit an upgrading software code to the remote video conference terminal.

Preferably, the method further comprises the following step before the step of sending the startup information about upgrading: realizing an unidirection and a bidirection data transmission mechanisms between the local video conference terminal and the remote video conference terminal connected through the video conference links. The step of realizing the unidirection and the bidirection data transmission mechanisms further comprises: the local video conference terminal and the remote video conference terminal entering a new video conference; when the new video conference is a point-to-point conference, the local video conference terminal and the remote video conference terminal directly opening one of standard data channels and the pre-arranged data channel to be taken as the unidirection and the bidirection data transmission mechanisms respectively; when the new video conference is a multi-point conference, the local video conference terminal applying for a chairman token from a multi-point control unit in the system of the video conference; the local video conference terminal requesting the multi-point control unit to broadcast images of the remote video conference terminal to all terminals of the video conference; the local video conference terminal requesting the multi-point control unit to selectively view the images of the remote video conference terminal, thereby realizing the bidirection data transmission mechanism between this two terminals; and the local video conference terminal applying for a standard channel token for sending data to the remote video conference terminal from the multi-point control unit, thereby realizing the unidirection data transmission mechanism between this two terminals.

Preferably, in the step of sending the startup information about upgrading; the local video conference terminal sending the startup information about upgrading to the remote video conference terminal through the unidirection data transmission mechanism to start the software upgrading process, or vice versa.

Preferably, the step of building the upgrading data channel further comprises: the local video conference terminal and the remote video conference terminal opening the pre-arranged data channel on the bidirection data transmission mechanism; and the local video conference terminal and the remote video conference terminal building a bidirection logical channel for upgrading the data channel on the built data channel to transmit control, response, status information and data of the software code of the software upgrading process.

Preferably, the step of the local terminal communicating with the remote terminal further comprises: the local video conference terminal exchanging configuration information related to the software upgrading with the remote video conference terminal to coordinate the software upgrading processes of each other; and the local video conference terminal sending the software code data to the remote video conference terminal through the upgrading data channel.

The essence of this invention is to transmit the software code from one terminal to another terminal through video conference links. With the method of the present invention for upgrading the software in the video conference terminal, it is unnecessary to the upgraded terminal to be equipped with a computer network interface, thereby expanding the applicable range of the software upgrading in the terminal; the present invention uses the existing video conference links of the remote video conference terminal to upgrade the software, thereby realizing the upgrading of the remote video conference terminal and decreasing the maintenance cost of terminal devices.

### Brief Description of the Accompanying Drawings

Fig. 1 is a system environment view schematically illustrating the upgrading of the software in a remote video conference terminal according to the method of the present invention;
Fig. 2 is a flow chart of the method for upgrading the software in the remote video conference terminal according to one embodiment of the present invention;
Fig. 3 is a flowchart of realizing unidirection and bidirection data transmission mechanisms in the method for upgrading the software in a remote video conference terminal according to one embodiment of the present invention; and
Fig. 4 is a flow view of building an upgrading data channel until the upgrading completed in the method for upgrading software in a remote video conference terminal according to one embodiment of the present invention.

### Embodiments for Carrying Out the Present Invention

The present invention will be further described in detail with reference to the accompanying drawings and the embodiment thereof.

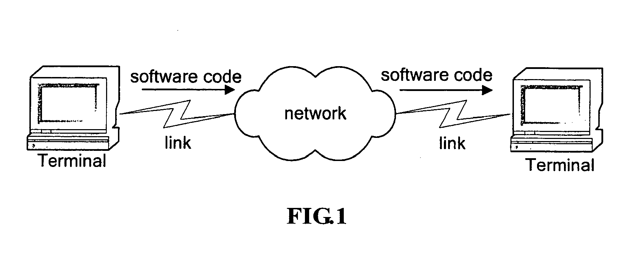

Fig. 1 schematically shows the system environment view of realizing the present invention, the two "terminals" shown in Fig. 1 respectively refer to a local video conference terminal and a remote video conference terminal, accordingly, "link" and "network" in the figure respectively refer to a video conference link and a video conference network which constitute a video conference link. The local terminal and the remote terminal respectively connect to the video conference network through the video conference link, thereby realizing terminal-to-terminal data transmission and information exchange. In the present invention, a software code is transmitted from the local terminal to another remote terminal through video conference links so as to realize the software upgrade.

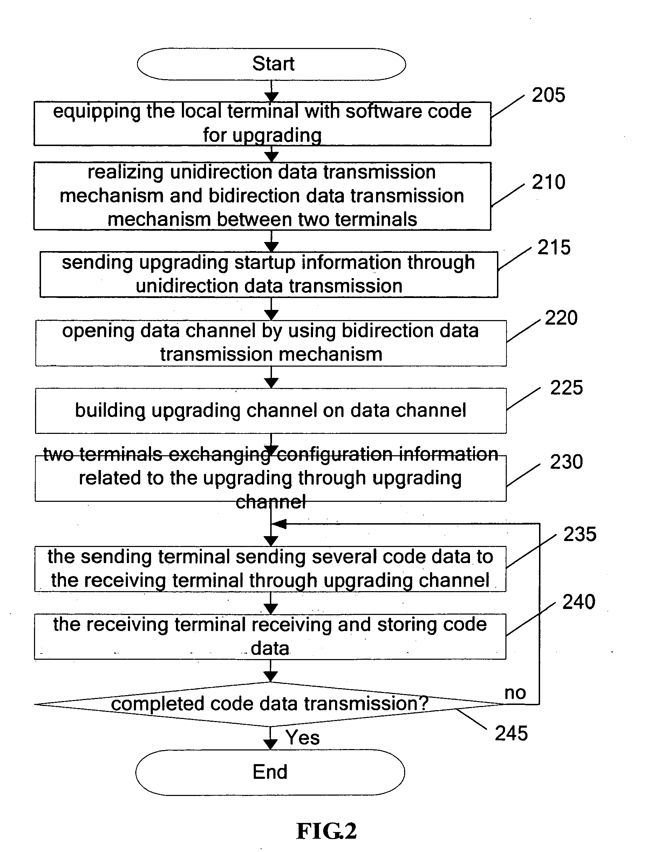

Fig. 2 is a flow chart of the method for upgrading the software in the remote video conference terminal according to an embodiment of the present invention. In the present embodiment, H.320 video conference link is taken as an example to illustrate the software upgrading process of the present invention, wherein the local video conference terminal and the remote video conference terminal are respectively the local H.320 video conference terminal and the remote H.320 video conference terminal, and respectively referred to as local terminal A and remote terminal B. As shown in Fig. 2, the process of the method according to the present embodiment is as follows:
at step 205, equipping the H.320 video conference terminal with the software for upgrading the remote terminal B. That is, a certain method is used to enable the local terminal A to access the software code for upgrading if desired. Therefore, it is possible to use various equipping manners, for example, the software code can be stored in a floppy disk, optical disc or U-disk and provided to the local terminal A through the corresponding drivers, and it can also be stored in RAM or ROM of the local terminal A in a certain manner, even in WEB server to which the local terminal A can access. In the present embodiment, the local terminal A uses its running software code for upgrading, and it can access its own RAM directly to acquire the corresponding software code without separate process for equipping the software code.

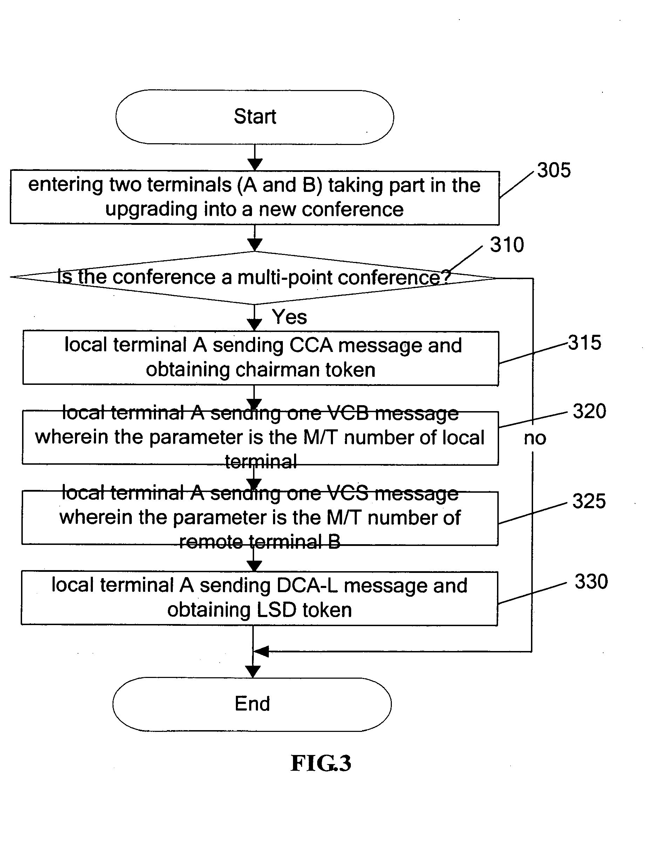

At step 210, an unidirection and a bidirection data transmission mechanisms are realized between the local terminal A and the remote terminal B. In the present embodiment, the local terminal A uses the LSD channel as the unidirection data transmission, and uses the video channel as the bidirection data transmission. Fig. 3 is a flow chart illustrating the process of realizing the unidirection and the bidirection data transmission mechanisms between the local terminal A and the remote terminal B in the present embodiment. As shown in Fig. 3, this process comprises:
at step 305, entering the two terminals A and B which need to take part in the upgrade into one new H.320 conference, wherein the two terminals should have the capability of transmitting a H.281 message through a LSD channel, and if the two terminals enter into a multi-point conference, it is necessary that the MCU (multi-point control unit) also has the corresponding capability;
at step 310, determining whether the present new conference is a multi-point conference. If the present conference is a point-to-point conference, then both of the terminals are able to open the LSD channel to send data to each other, and both of the terminals are able to receive data from each other (seeing images of each other, referred to as "mutually seeing images") above a video channel, thereby realizing the unidirection and the bidirection data transmission mechanisms, so the process of realizing the unidirection and the bidirection data transmission mechanisms is end. If the present conference is the multi-point conference, then the process goes to step 315;
at step 315, the local terminal A sending a CCA message, applying for a chairman token, then the MCU granting the chairman token to the local terminal A in response to the request, and;
at step 320, the local terminal A sending one VCB message, wherein the parameter of this message is the M/T number of the remote terminal B, the MCU broadcasting the image of the local terminal A to all the other terminals of the conference in response to the message, thereby enabling the remote terminal B to view the image of the local terminal A;
at step 325, the local terminal A sending one VCS message for requesting to see the image selectively, wherein the parameter of the message is the M/T number of the remote terminal B, the MCU sending the image of the remote terminal B to the local terminal A in response to the message, thus in the condition of multi-point conference, so that the two terminals can see the images of each other, thereby realizing the bidirection data transmission mechanism;
at step 330, the local terminal A sending one DCA-L message, and applying for a LSD token, the MCU granting the LSD token to the remote terminal B in response to the LSD token, thus the local terminal A having the power to send data to the remote terminal B above the LSD channel in the multi-point conference, thereby realizing the unidirection data transmission mechanism.

It should be understood that the unidirection data transmission and the bidirection data transmission in the present invention both refer to the logic function, and it is unnecessary to be a separate entity. As the bidirection data transmission also has the function of the unidirection data transmission, the bidirection data transmission mechanism can also realize the unidirection data transmission, and it is unnecessary to separately realize the unidirection data transmission mechanism.

Now turn back to Fig. 2, at the step 215, the local terminal sends one startup information about upgrading. The local terminal A sends the startup information about upgrading through the LSD channel to notify the remote terminal B to start the software upgrading process. This message is one expanded H.281 message e actually and specifically belongs to the Action information, the structure of the upgrading startup message is as the following:

**Table 1:**

| sequence | length (bytes) | definition |
|---|---|---|
| 1 | 1 | action code, fixed to 0x08 |
| 2 | 1 | upgrading direction, 1-upgrading the software of the opposite terminal, 2-upgrading the software of the present terminal |
| 3 | 1 | type of the software code to be upgraded |

Wherein the first part is the action code of 1 byte, the H.281 protocol uses 0x01-0x07 which is set to 0x08 here, the remote terminal B separates out the startup information about upgrading through the action code of 0x08.

The second part uses one byte to represent the upgrading direction, and the direction is defined with respect to the terminal sending the startup information about upgrading, 1 refers to the software upgrade in the opposite terminal, 2 refers to the software upgrade in the present terminal, and the upgrading direction determines the sending terminal and the receiving terminal in the software code transmission process simultaneously, the present terminal is the sending terminal and the opposite terminal is the receiving terminal when the upgrading direction is 1, it is exactly opposite when the upgrading direction is 2. With respect to the present embodiment, if it is the local terminal A sending the startup information about upgrading, the upgrading direction is 1, and this means to upgrade the software of the remote terminal B, so the local terminal A is the sending terminal of the software code, and the remote terminal B is the receiving terminal.

It should be illustrated that in the present embodiment, it is the local terminal A sending the startup information about upgrading to the remote terminal B, that is, the local terminal A starts the software upgrading process. In other cases, it is also possible that the remote terminal sends the startup information about upgrading to a local terminal to start the software upgrading process, and in this case, the value of the upgrading direction part in the startup information about upgrading is 2, that is, upgrading the software of the terminal which sends the startup information about upgrading, and the terminal which receives this message is the sending terminal of the software code.

The third part uses one byte to represent the type of the software code which needs to be upgraded, and it is possible for the terminal to divide the software code into various kinds of different management (for example, divided according to audio, video and multiplexing), it is possible to upgrade one or morel types therein in practice, the type of the software code in the upgrading process can be designated by this part, and if necessary to upgrade multiple types of the software code, the software upgrading process can be implemented repeatedly, wherein designated to upgrade different software codes for each time.

At step 220, opening a data channel by using the bidirection data transmission mechanism. In this step, the two terminals open a preset data channel on the basis of the bidirection data transmission mechanism already realized, and the channel can be one of the standard data channels such as LSD, HSD, MLP or H-MLP prescribed by the H.320 video conference protocol system, video channels which is idle when the two terminals temporarily stop sending video data, and a part of the time slot in the above channels. In the present embodiment, after sending (receives) the startup information about upgrading, the local terminal A (remote terminal B) stops sending the video data above the video channel, in the next upgrading process, the two terminals directly use the idle video channels as the data channel for upgrading.

At step 225, building an upgrading channel at the data channel. The upgrading channel is used to transmit control, response, status information and software code data in the software upgrading process.

After building the upgrading channel, the local terminal A and the remote terminal B communicate with each other above the upgrading channel, thereby completing the transmission of the software code.

Firstly, at step 230, the two terminals exchanging the configuration information related to the upgrading such as version and size of the software. The configuration information includes the size, version number and the like of the software code to be upgraded.

At step 235, the local terminal sending several bytes of the software code data to the remote terminal through the upgrading channel.

At step 240, the remote terminal receiving the software code data through the upgrading channel.

At step 245, determining whether the transmission of the software code data finished, if finished, completing the process, or otherwise going to the step 235.

In the present embodiment, the configuration information and the software code data in the steps 230 and 235 are transmitted in the manner of packet respectively through the upgrading channel, wherein each packet is composed of several bytes. The packets are transmitted above the video channel used as the upgrading channel, and the contents in the same packet are transmitted continuously and sequentially, the first byte of the next packet is transmitted following the last byte of the previous packet, and the two terminals both send packet to the personal uplink video channel while receiving packet from the personal downlink video channel.

The following table shows the format of the packet transmitted through the upgrading channel:

**Table2**

| sequence | field name | length (byte) | definition |
|---|---|---|---|
| 1 | header | 4 | as startup symbol, the content always is 0x12 0x56 0x34 0x78 |
| 2 | length | 4 | the total length (byte) of all the fields including the packet containing the header |
| 3 | serial number | 4 | it is 0 for its initial value, and adding 1 when sending one message |
| 4 | code | 4 | indicating the type of the message |
| 5 | parameter | uncertain | varying with the difference of the code field, the length is the total length of the message subtracting 18 |

Wherein, the first part is the header of which the content of 4 bytes is fixed, and as the startup symbol of the packet;
The second part is the length of 4 bytes, giving the total length of the present packet;
The third part is the serial number of 4 bytes, judging whether any message lost by checking whether the serial number is continuous when the remote terminal receives the packet;
The fourth part is the code of 4 bytes, giving the type of the present packet; and
The fifth part is the message parameter of variable length, the length and the meanings of these parameters different for the packets of different types.

The following table shows the value and corresponding meanings of the code in the packet:

**Table 3:**

| code of the message | Type of the message | length of the parameter | meaning of the parameter |
|---|---|---|---|
| 1 | Connecting | 0 | None |
| 2 | Connected | 0 | None |
| 3 | Filling | Uncertain | Meaningless |
| 4 | Code property | 8 | property of the software code to be upgraded, the first 4 bytes is the version number, and the last 4 bytes is the size of the code |
| 5 | Code data | More than 8 | The first 4 bytes are the start offset address of the code data sent this time with respect to the first byte of the code, the next 4 bytes are the amount of the code data sent this time in unit of byte, and the following bytes are the code data. |

Wherein, the "connecting" and "connected" messages are used to position the packet correctly in the byte stream transmitted through the video channels, and this process can be referred to synchronization;
The "filling" message is used for maintaining the synchronization of receiving message; and

The "code property" and "code data" messages are used for transmitting the code information.

The using of these different types of message will be described in detail in the following.

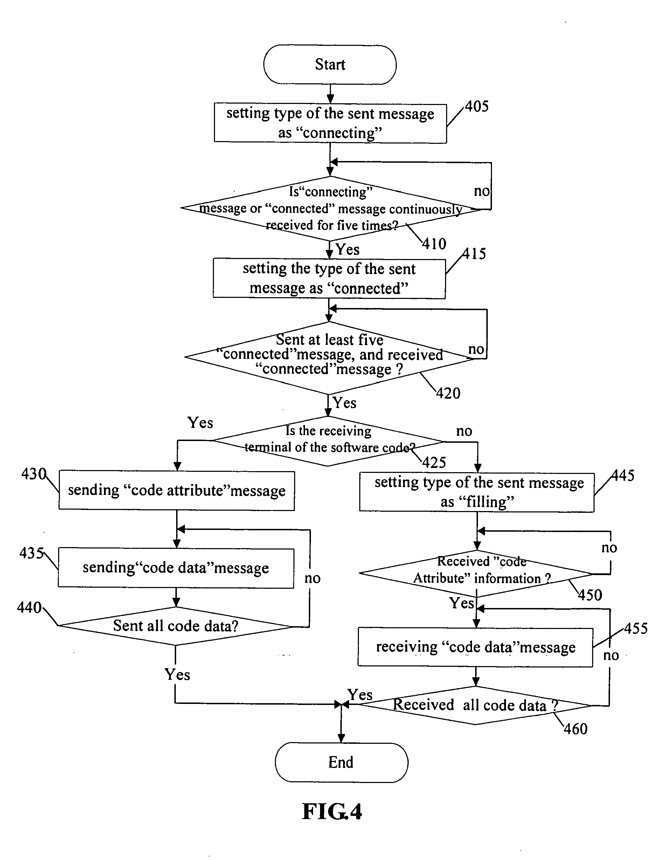

Fig. 4 is the flow chart of the local terminal and the remote terminal from building the upgrading channel until completing the upgrading. As illustrated in Fig. 4, the process starts from sending and receiving packets above the video channel. First, step 405 to step 420 are the procedure in which the two terminals perform communication handshake above the upgrading channel.

At step 405, setting the type of the sent packet to "connecting".

At step 410, separating message one by one from the byte stream in the manner of searching the header of the message, and acquiring the type of the message according to the format of the message previously defined. In order to avoid the misjudgment, it is necessary to receive the "connecting" or "connected" message for 5 times when going to step 415, or otherwise repeating this step, apparently, this step is a process of performing the synchronization to the received video data according to the format of the packet.

At step 415, setting the type of the sent packet to be "connected".

At step 420, in order to ensure the opposite terminal to receive enough "connecting" or "connected" message to realize the synchronization of the packet, it is necessary to send the "connected" message for at least 5 times. If the "connected" message has been sent for at least 5 times and the "connected" message also has been received from the opposite terminal, it means that the two terminals both realize the synchronization, so it is considered that the handshake is successful, then going to step 425, or otherwise repeating this step.

At step 425, judging whether the present terminal is the sending terminal of the software code, going to step 430 if so, or otherwise going to step 445.

At step 430, sending one "code property" message, and the version and size of the software code are both retrieved from the software code of the corresponding type (in the embodiment, the version of the code is one number of 4 bytes, and if the character string is adopted to represent the version number, it is possible to revise the format of the "code property" message.) being operated by the sending terminal. After sending all the messages, the sending pointer of the code data in the present terminal is cleared to be 0.

At step 435, according to the sending pointer of the code data, reading out a software code data of several bytes at the corresponding position of the software code of the corresponding type being used by the present terminal, constructing and sending one "code data" message, and upgrading the sending pointer of the code data correspondingly.

At step 440, judging whether the sending of the software code data is completed, ending the process if so, or otherwise going to the step 435.

At step 445, setting the type of the send message to be "filling". The video channel used by the upgrading channel is a channel with constant bandwidth, which demands the packet be sent continuously, or otherwise the opposite terminal will lose the synchronization of the packet. The sending terminal must send the "filling" message when having no message of other types, so as to maintain the synchronization of the opposite terminal, and the parameter of the message is meaningless and the said length aims at realizing the filling.

At step 450, waiting for receiving the "code property" message, the receiving terminal should prepare for the receiving according to the information in the message. If received the "code property" message, goes to step 455, or repeats the present step.

At step 455, receiving the "code data" message, taking out and storing the software code data therein.

At step 460, judging whether all the code data are received, going to the step 455 if so, or otherwise ending the process.

Whereas the present invention has been particularly shown and described with reference to the embodiments thereof, it will be understood by those skilled in the art that any amendment or equivalent replacement made to the technical solution of the present invention without departing from the spirit and scope of the present invention shall all be covered by the scope of the claims of the present invention.

## Claims

1. A method for upgrading software in a remote video conference terminal, **characterized in that** the method utilizes a local video conference terminal equipped with the required upgrading software through video conference links to upgrade the software in the remote video conference terminal of which the software needs to be upgraded.

2. The method according to claim 1, **characterized in that** comprising the steps of:
the local video conference terminal equipped with the required upgrading software sending a startup information about upgrading to the remote video conference terminal of which the software needs to be upgraded to start a software upgrading process, or vice versa;
building an upgrading data channel between the local video conference terminal and the remote video conference terminal; and
the local video conference terminal 1 communicating with the remote video conference terminal through the upgrading data channel to transmit an upgrading software code to the remote video conference terminal.

3. The method according to claim 2, **characterized in that** the local video conference terminal equipped with the required upgrading software is a video terminal which can access to the upgrading software code.

4. The method according to claim 2, **characterized in that** further comprising the following step before the step of sending the startup information about upgrading:
realizing an unidirection data transmission mechanism and a bidirection data transmission mechanism between the local video conference terminal and the remote video conference terminal connected through the video conference links.

5. The method according to claim 4, **characterized in that** the step of realizing the unidirection and the bidirection data transmission mechanisms further comprising:
the local video conference terminal and the remote video conference terminal entering into a new video conference;
when the new video conference is a point-to-point conference, the local video conference terminal and the remote video conference terminal directly opening one of standard data channels and a video channel to be taken as the unidirection and the bidirection data transmission mechanisms respectively;
when the new video conference is a multi-point conference,
the local video conference terminal applying for a chairman token from a multi-point control unit in the video conference system;
the local video conference terminal requesting the multi-point control unit to broadcast images of the remote video conference terminal to all terminals of the video conference;
the local video conference terminal requesting the multi-point control unit to selectively view the images of the remote video conference terminal, thereby realizing the bidirection data transmission mechanism between this two terminals; and
the local video conference terminal applying for a standard channel token for sending data to the remote video conference terminal from the multi-point control unit, thereby realizing the unidirection data transmission mechanism between the two terminals.

6. The method according to claim 5, **characterized in that** in the step of sending the startup information about upgrading, the local video conference terminal sending the startup information about upgrading to the remote video conference terminal by the unidirection data transmission mechanism to start the software upgrading process, or vice versa.

7. The method according to claim 2 or 6, **characterized in that** the startup information about upgrading is an extended H.281 message, and belongs to the action message.

8. The method according to claim 7, **characterized in that** the startup information about upgrading comprises three parts, i.e. an action code, an upgrading direction, and a software code type, wherein the action code part indicates a code of an action conducted by separating the startup information about upgrading, the upgrading direction part indicates an upgrading direction with respect of the terminal sending the startup information about upgrading, and the software code type part indicates the type of the software code is audio, video or multiplexing.

9. The method according to claim 5, **characterized in that** the step of building the upgrading data channel further comprising:
the local video conference terminal and the remote video conference terminal opening the pre-arranged data channel on the bidirection data transmission mechanism; and
the local video conference terminal and the remote video conference terminal building a bidirection logical channel for upgrading the data channel on the built data channel to transmit control, response, status information and data of the software code of the software upgrading process.

10. The method according to claim 9, **characterized in that** the pre-arranged data channel is one of the standard data channels, a free video channel or a part of time slot in the above-mentioned channels.

11. The method according to claims 5 or 10, **characterized in that** the standard data channels include LSD, HSD, MLP, and H-MLP channels.

12. The method according to claim 9, **characterized in that** the upgrading data channel built on the built data channels is a continued packet composed of a series of continued bit strings of fixed length while contents changeable or a series of byte strings of different lengths and uses, or a TCP/IP protocol stack which is realized on the data channels and one of TCP or UDP ports serves as the TCP/IP protocol stack of the upgrading channel.

13. The method according to claim 2, 5 or 9, **characterized in that** the step of the local terminal communicating with the remote terminal further comprising:
the local video conference terminal exchanging configuration information related to the software upgrading with the remote video conference terminal to coordinate the software upgrading processes of each other; and
the local video conference terminal sending the software code data to the remote video conference terminal through the upgrading data channel.

14. The method according to claim 13, **characterized in that** the local video conference terminal communicates with the remote video conference terminal through the packet.

15. The method according to claim 14, **characterized in that** the packet comprises:
header serving as a startup symbol;
length indicating the total length of the packet including all fields;
serial number indicating the sequence number of the packet;
code indicating the type of the message; and
parameter indicating parameters of different lengths and meanings for the message of different types.

16. The method according to claim 15, **characterized in that** the code in the packet indicates the code of connecting, connected, version number of the software code for upgrading, code attribute indicating the size of the code, and type of the code data message.
